# EUROPEAN PATENT APPLICATION

(11) **EP 1 189 186 A2**
(43) Date of publication of application: **20.03.2002**
(21) Application number: 01610094.3
(22) Date of filing: 12.09.2001
(51) Int. Cl.: G07F 19/00

(54) **System and method for identity verification**

(30) Priority: 12.09.2000 NO 20004542
(71) Applicant: Autencia, 3908 Porsgrunn (NO)
(72) Inventor: Hagen, Alte, 3716 Skien (NO)
(74) Representative: Wittrup, Flemming

(57) **Abstract**

A system and method for identity verification. A first party can verify his identity with a second party in that the first party by using a computer (100) via an electronic connection registers with the second party (200), and that where the second party registers the first party's telephone number in his database (202). When the first party later logs on to the second party's website, the first party identifies himself by giving his telephone number via the electronic connection. The processor (201) verifies that the telephone number given matches the telephone number registered in the database (202), whereupon the processor sends a computer-generated, unique password to the first party's telephone (101, 102). The first party enters the password on his computer (100), whereupon it is sent to the second party's processor (201) where the password is verified against the message recently sent over the telecommunication network. If the first party's identity is thus verified, the parties establish contact for an exchange of information over the electronic connection. As a new password is generated before each transaction and the relaying of the password takes place via two separate networks. This is a very secure, fast and simple method of verifying user identity via an electronic connection.

## Description

The present invention relates to the exchange of information via networks, more specifically a system and a method for the exchange of information via networks in order to verify the identity of a user.

There are known systems and methods for transactions by means of electronic media, where the transactions require that the identity of one party (e.g., a customer) should be verified by means of a password or PIN code. It is also increasingly common to exchange information and sell products and services via the Internet. The websites of newspapers, the "netbanks" of financial institutions, and the sale of, e.g., books, electronic equipment etc. are just a few examples. Increasingly confidential information is transmitted over the Internet or other networks, such as messages to and from, e.g., the health and social welfare services and pharmacies, law offices and clients etc. To enable such transactions to be carried out in a secure manner, dedicated passwords or PIN codes are often used. Today's systems for user recognition are highly complex in order to obtain adequate security for transactions over, e.g., the Internet. They are also difficult and complicated to handle. The costs of transactions thus become so high that, e.g., it is not profitable when small sums are involved in the trading. The complexity of today's systems in particular has made it impossible to agree on a standard, which in turn has limited the spread of e-business. A number of these systems are based on special software (E-cash, CyberCash, Wallet and the like) installed in the client-machines and contribute to the unreliability and problems related to machine malfunction and program faults in other software installed in the client-machine. There is also a great potential for the loss of "money" in the event of a crash, caused by either software or hardware. When using "traditional means", as for instance credit cards, there is a high risk of fraud and this has resulted in a strong fear of using such cards over the Internet. The disadvantage of existing password systems is, in other words, that they are very complicated to handle or they can easily go wrong and are open to abuse. For example, the payment systems that are available on the Internet today have a very high threshold for the user because of the insecurity associated with credit card fraud, hacking etc. It can therefore be difficult to take payment for services on the Internet, especially for services that are relatively inexpensive, as for instance news. Furthermore, the systems of existing Internet suppliers often have the disadvantage that the customer's password is stored in the supplier's database, which is exposed to break-in. Other suppliers of Internet services use a system where the customer is sent a number of passwords on, e.g., a plastic card that the customer then keeps, with the accompanying danger of abuse and theft. There is therefore a great need for a system and a method that permit secure communication via different electronic connections or networks (including the Internet), where the user's identity is verified conclusively by the generation and transmission of a password that is not easy to steal or abuse.

Thus, according to the invention, there is provided a system and a method that are characterised by the characteristic features recited in independent claims 1 and 15. Preferred features of the invention are set forth in accompanying claims 2-14 and 16-28.

The advanced encryption needed by the known systems that involve the use of credit cards, "Wallet" and other forms of encrypted payment is not required by the system and the method according to the invention, as the confirmation password is not sent via the Internet, but via the telecommunication network to a specified telephone number and only to the person who has the associated telephone in his possession. As a new password is also generated for each transaction and this is only valid in a given period of time, the system will be both very difficult and - not least - of little temptation to defraud. The system and the method according to the invention are thus highly suitable for all types of identity verification.

The system and the method according to the invention are, *inter alia,* suitable for all forms of payment and would be profitable for Internet suppliers of very inexpensive services. The inventive system and the method can also advantageously be used for identity verification in connection with many different transactions via any network.

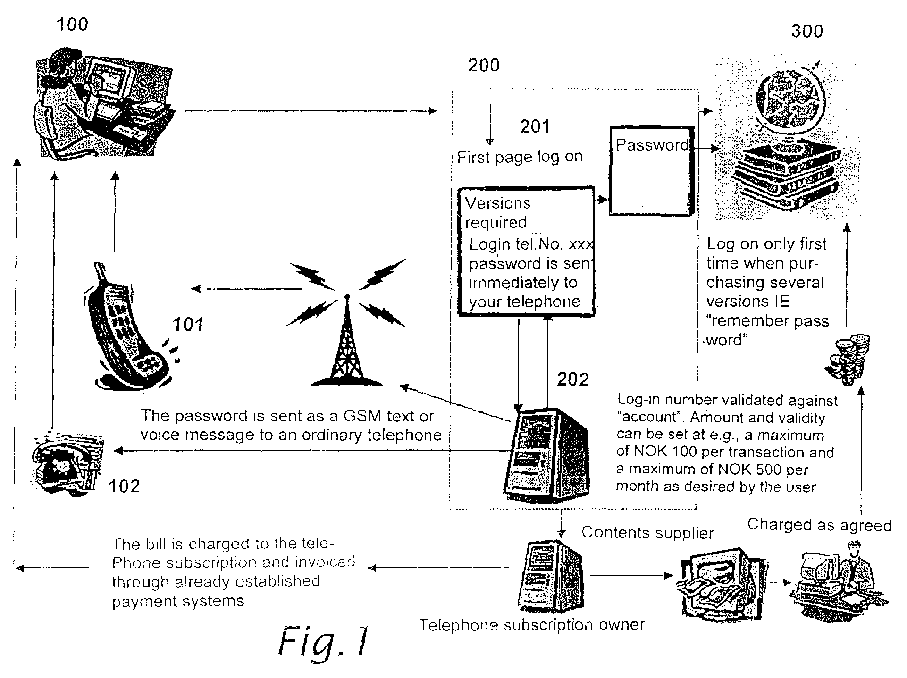

Fig. 1 is a schematic illustration of an embodiment of the system and method according to the invention. The figure shows a computer 100 that via an electronic connection is connected to a second party 200. The second party has a processor 201, a database 202 and a service 300, and also communicates by telephones 101, 102 which must belong to the first party.

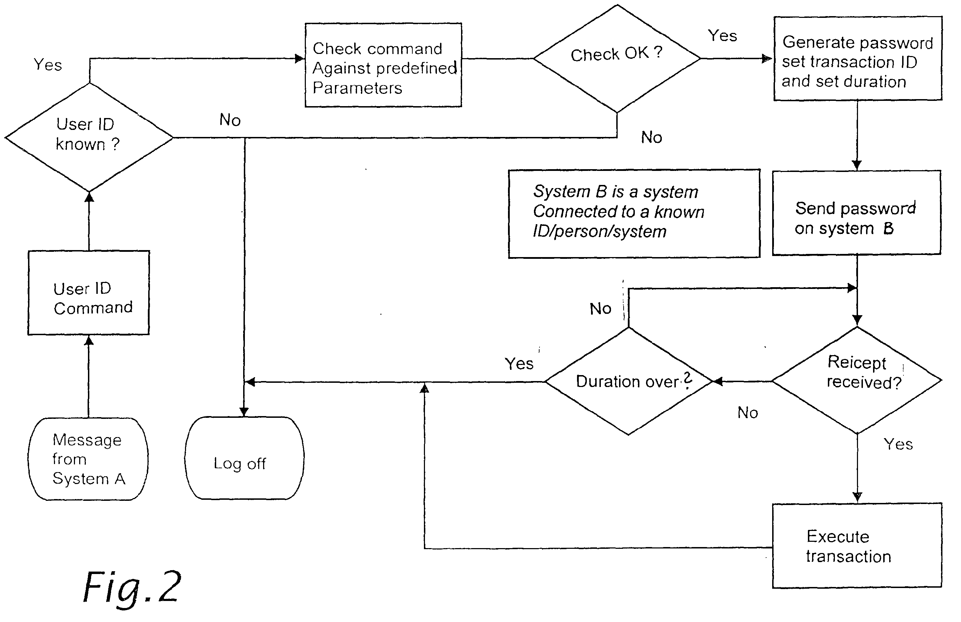

Fig. 2 is a flow chart where "System A" is preferably the electronic connection; "User ID" is the identity sign of the first party, where "predefined parameters" may include, e.g., limitations as regards price, relevant time period or geographical areas; and "System B" is a system that is connected to a known ID/person/system, for instance, a telecommunication network.

Figure 1 shows a first party (e.g., a customer) who by using the computer 100 via the electronic connection registers with a second party 200 (e.g., a supplier). The second party registers the first party's telephone number in his database 202, and later the first party logs on to the second party's website in a known way. The first party identifies himself by giving his telephone number by entering the number on his computer 100. The telephone number is transmitted to the second party 200 via the electronic connection (e.g., the Internet), and the processor 201 verifies that the telephone number given matches the telephone number registered in the second party's database 202.

The second party's processor 201 then sends a computer-generated, unique password to the first party's telephone 101, 102. If the telephone number is a mobile telephone number, the password can be sent as a GMS text message, but the password can be sent to any telephone as a voice message or text message if the telephone has the facility to accept messages of this type.

The first party keys the password received into his computer 100, whereupon it is transmitted via the electronic connection (System A, e.g., the Internet) to the second party's processor 201 where the password is verified against the message recently sent over the telecommunication network. If the identity of the first party is thus verified, the parties establish contact for an exchange of information over the electronic connection. The process is also illustrated in Figure 2.

The example in Figure 1 shows the first party as a customer who, e.g., wishes to make use of the services of a supplier of services and products on the Internet (as the second party). The customer, who wants to purchase a product or service offered by the supplier, has established contact with the supplier and has verified his identity as described above. The supplier's processor 201 then verifies that the price for the product and/or service ordered is within a pre-agreed limit, and executes the transaction by giving the customer access to the service ordered or by ensuring that the product ordered is delivered.
The password authorises the customer to make use of the supplier's services for an amount within a pre-agreed sum per transaction and/or within a predetermined period of time. The agreed sum is charged to the customer's telephone subscription and is invoiced on the telephone bill or another agreed account belonging to the first party. The password is valid only for a specific transaction.

Although in the foregoing description reference is made to examples of transactions between two parties where the electronic connection is the Internet, the system and the method according to the invention should not be limited to identity verification in connection with transactions via the Internet. The system and the method according to the invention comprise identity verification in connection with transactions via an electronic connection in general, as is reflected in the attached patent claims.

## Claims

1. A system for identity verification, wherein a first party (100) wishes to execute a transaction with a second party (200), and wherein the first party by using a computer (100) via an electronic connection, or in another known way, registers with the second party's computer, and wherein the second party registers the first party's telephone number in his database (202), and wherein the first party at a later time in a known way per se logs on to the second party via the electronic connection, **characterised in that**:
i) the first party gives his telephone number by entering it on his computer (100) which transmits the telephone number to the second party (200) via the electronic connection;
ii) the second party's processor (201) verifies that the telephone number given matches the telephone number registered in the second party's database (202);
iii) the second party's processor (201) sends a computer-generated, unique password to the first party's telephone (101, 102) via a telecommunication network;
iv) the first party enters the password in his computer (100), whereupon it is sent via the electronic connection to the second party's processor (201) where the password is verified against the message recently sent via the telecommunication network;
v) if the first party's identity is thus verified, the parties establish contact via the electronic connection for an exchange of information.

2. A system for identity verification according to claim 1, **characterised in that** the transaction comprises an exchange of information between the parties.

3. A system for identity verification according to claim 1, **characterised in that** the transaction comprises the first party's purchase of goods or services from the second party.

4. A system for identity verification according to claim 1, **characterised in that** the electronic connection is the Internet.

5. A system according to any one of claims 1 to 4, **characterised in that** the first party is a customer and the second party is a supplier of services and products, and where:
i) the customer wishes to purchase a product or service (300) offered by the supplier;
ii) the supplier's processor (201) verifies that the price for the product and/or service ordered is within a pre-agreed limit;
iii) if the customer's identity is verified, the transaction is executed by the supplier giving the customer access to the Internet service (300) ordered or ensuring delivery of the product ordered; and
iv) the agreed sum is charged to the customer's telephone subscription and invoiced on his telephone bill.

6. A system according to any one of claims 1 to 4, **characterised in that** the telephone number is a mobile telephone number and that the password is sent to the telephone (101) as a GMS text message.

7. A system according to any one of claims 1 to 4, **characterised in that** the password is sent to the telephone (101, 102) as a voice message.

8. A system according to any one of claims 1 to 4, **characterised in that** the password is sent to the telephone (101, 102) as a text message.

9. A system according to any one of claims 1 to 4, **characterised in that** the password authorises the first party to make use of the second party's services for a maximum of a predetermined amount per transaction.

10. A system according to any one of claims 1 to 4, **characterised in that** the password authorises the first party to make use of the second party's services in one or more predetermined periods of time.

11. A system according to any one of claims 1 to 4, **characterised in that** the price for the service or the product is charged to an account belonging to the first party.

12. A system according to any one of claim 1 to 4, **characterised in that** the password is only valid for a particular transaction.

13. A system according to any one of claims 1 to 4, **characterised in that** the password is only valid within a geographical area.

14. A system according to any one of claims 1 to 4, **characterised in that** when the password is generated a timer starts that determines the duration of the password, and where this is made visible to the first party in the form of a countdown on the screen, and where the transaction is rendered invalid and a new password must be requested if the password has not been used before the timer has run out.

15. A method for identity verification, wherein a first party (100) wishes to execute a transaction with a second party (200), and wherein the first party by using a computer (100) via an electronic connection, or in another known way, registers with the second party's computer, and wherein the second party registers the first party's telephone number in his database (202), and wherein the first party at a later time in a known way per se logs on to the second party via the electronic connection, **characterised in that**:
i) the first party gives his telephone number by entering it on his computer (100) which transmits the telephone number to the second party (200) via the electronic connection;
ii) the second party's processor (201) verifies that the telephone number given matches the telephone number registered in the second party's database (202);
iii) the second party's processor (201) sends a computer-generated, unique password to the first party's telephone (101, 102) via a telecommunication network;
iv) the first party enters the password in his computer (100), whereupon it is sent via the electronic connection to the second party's processor (201) where the password is verified against the message recently sent via the telecommunication network;
v) if the first party's identity is thus verified, the parties establish contact via the electronic connection for an exchange of information.

16. A method for identity verification according to claim 15, **characterised in that** the transaction comprises an exchange of information between the parties.

17. A method for identity verification according to claim 15, **characterised in that** the transaction comprises the first party's purchase of goods or services from the second party.

18. A method for identity verification according to claim 15, **characterised in that** the electronic connection is the Internet.

19. A method according to any one of claims 15 to 18, **characterised in that** the first party is a customer and the second party is a supplier of services and products, and where:
i) the customer wishes to purchase a product or service (300) offered by the supplier;
ii) the supplier's processor (201) verifies that the price for the product and/or service ordered is within a pre-agreed limit;
iii) if the customer's identity is verified, the transaction is executed by the supplier giving the customer access to the Internet service (300) ordered or ensuring delivery of the product ordered; and
iv) the agreed sum is charged to the customer's telephone subscription and invoiced on his telephone bill.

20. A method according to any one of claims 15 to 18, **characterised in that** the telephone number is a mobile telephone number and that the password is sent to the telephone (101) as a GMS text message.

21. A method according to any one of claims 15 to 18, **characterised in that** the password is sent to the telephone (101, 102) as a voice message.

22. A method according to any one of claims 15 to 18, **characterised in that** the password is sent to the telephone (101, 102) as a text message.

23. A method according to any one of claims 15 to 18, **characterised in that** the password authorises the first party to make use of the second party's services for a maximum of a predetermined amount per transaction.

24. A method according to any one of claims 15 to 18, **characterised in that** the password authorises the first party to make use of the second party's services in one or more predetermined periods of time.

25. A method according to any one of claims 15 to 18, **characterised in that** the price for the service or the product is charged to an account belonging to the first party.

26. A method according to any one of claim 15 to 18, **characterised in that** the password is only valid for a particular transaction.

27. A method according to any one of claims 16 to 19, **characterised in that** the password is only valid within a geographical area.

28. A method according to any one of claims 16 to 19, **characterised in that** when the password is generated a timer starts that determines the duration of the password, and where this is made visible to the first party in the form of a countdown on the screen, and where the transaction is rendered invalid and a new password must be requested if the password has not been used before the timer has run out.
